# EUROPÄISCHE PATENTSCHRIFT

(11) **EP 1 373 379 B1**
(45) Veröffentlichungstag und Bekanntmachung des Hinweises auf die Patenterteilung: **31.08.2005**
(21) Anmeldenummer: 02732451.6
(22) Anmeldetag: 01.03.2002
(51) Int. Cl.: C08J 5/22, H01M 8/12

(54) **VERFAHREN ZUR HERSTELLUNG EINER MEMBRAN AUS VERBRÜCKTEM POLYMER UND BRENNSTOFFZELLE**
METHOD FOR PRODUCING A MEMBRANE MADE OF BRIDGED POLYMER AND A FUEL CELL
PROCEDE POUR PRODUIRE UNE MEMBRANE EN POLYMERE PONTE ET CELLULE ELECTROCHIMIQUE

(30) Priorität: 07.03.2001 DE 10110752
(43) Veröffentlichungstag der Anmeldung: 02.01.2004
(73) Patentinhaber: Pemeas GmbH, 65926 Frankfurt am Main (DE)
(72) Erfinder: UENSAL, Oemer, 55128 Mainz (DE); KIEFER, Joachim, 65510 Idstein (DE)
(74) Vertreter: Luderschmidt, Schüler & Partner GbR
(86) Internationale Anmeldenummer: PCT/EP2002/002215
(87) Internationale Veröffentlichungsnummer: WO 2002/070592

(56) Entgegenhaltungen:
- WO-A-00/44816
- US-A- 5 599 639

## Beschreibung

Die vorliegende Erfindung betrifft eine Membran aus verbrücktem Polymer, ein Verfahren zur deren Herstellung und eine Brennstoffzelle enthaltend eine solche Membran.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas, und der anderen Elektrode ein Oxidationsmittel, wie Sauerstoffgas, zugeführt und dadurch chemische Energie aus der Brennstoffoxidation in elektrische Energie umgewandelt.

Der Elektrolyt ist für Wasserstoffionen, d.h. Protonen, aber nicht für reaktive Gase wie das Wasserstoffgas und das Sauerstoffgas durchlässig.

Eine Brennstoffzelle weist in der Regel mehrere Einzelzellen sogenannte MEU's (Membrane-Electrode-Unit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. So verwendet man als Materialien für Polymerelektrolytmembranen beispielsweise Perfluorsulfonsäurepolymere und Komplexe aus basischen Polymeren und starken Säuren.

Das Perfluorsulfonsäurepolymer weist im allgemeinen ein Perfluorkohlenwasserstoffgerüst, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe. Die Sulfonsäuregruppe geht unter Abgabe eines Wasserstoffions in ein Anion über und leitet daher Protonen.

Es sind bereits Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazole, in eine starke Säure, wie Phosphorsäure, Schwefelsäure usw., eingetaucht wird.

Eine solche Brennstoffzelle, bei der eine derartige Polymerelektrolytmembran eingesetzt wird, hat den Vorteil, daß sie bei Temperaturen von 100°C oder darüber betrieben werden kann.

In *J. Electrochem. Soc.,* Band 142, Nr. 7, 1995, S. L121-L123 wird die Dotierung des eines Polybenzimidazols in Phosphorsäure beschrieben.

In WO97/37396 und der korrespondierenden US-PS 5,716,727 wird ein Verfahren zur Herstellung einer Polymerelektrolytmembran beschrieben, bei dem man ein Polybenzimidazol in Trifluoressigsäure löst, die Lösung dann mit Phosphorsäure versetzt und anschließend das Lösungsmittel entfernt.

Selbst wenn ein basisches Polymer an sich eine ausreichende mechanische Festigkeit aufweist, kommt es vor, daß die mechanische Festigkeit des basischen Polymers durch Imprägnieren mit einer starken Säure zwecks Verleihung von Protonenleitfähigkeit bis zu einem unzureichenden Grad abnimmt. Daher ist eine weitere Verbesserung der mechanischen Festigkeit des basischen Polymers zwecks Anwendung des Komplexes aus dem basischen Polymer und der starken Säure auf die Elektrolytmembran für die Brennstoffzelle usw. erwünscht.

In der US-PS 5,599,639 wird ein basisches Polymer beschrieben, wobei in ein basisches Polymer, Polybenzimidazol usw., mittels eines Linkers, wie einer Alkylengruppe usw., eine Sulfonsäuregruppe eingeführt wird. Das basische Polymer muß Wasser aufnehmen, damit es protonenleitfähig wird und somit als Elektrolytmembran für die Brennstoffzelle verwendet werden kann.

Beim Eintauchen des basischen Polymers in Wasser kommt es jedoch vor, daß das basische Polymer aufquillt und keine ausreichende mechanische Festigkeit erzielt wird.

In WO 00/44816 finden sich Ansätze zur Verbesserung der mechanischen Festigkeit und des Quellverhaltens einer Membran. Hierbei wird eine Lösung enthaltend ein basisches Polymer und ein Verbrückungsreagenz zum Gießen der Membran eingesetzt und anschließend die Verbrückung durchgeführt. Auch diese Membranen sind hinsichtlich ihrer mechanischen Festigkeit noch verbesserungswürdig. Insbesondere die Bruchzähigkeit ist noch unzureichend.

Es wurde nunmehr gefunden, daß eine Verbrückung der basischen Polymeren und des Verbrückungsreagenz in Gegenwart eines speziellen Katalysators Abhilfe schafft.

Gegenstand der vorliegenden Erfindung sind Membran aus verbrücktem Polymer erhältlich durch ein Verfahren umfassend die folgenden Schritte:
A. Herstellung einer Lösung enthaltend ein basisches Polymer mit mindestens einer Aminogruppe in einer Wiederholungseinheit und mindestens einem Verbrückungsreagenz in einem geeigneten Lösemittel,
B. Gießen einer Folie mit der aus Schritt A) erhaltenen Lösung
C. Entfernen des Lösemittels aus Schritt A)
D. Durchführung der Verbrückungsreaktion in der gemäß Schritt C) erhaltenen Folie
E. Dotierung der gemäß Schritt D) erhaltenen Folie mit einer starken Säure
dadurch gekennzeichnet, daß in Schritt A) zusätzlich ein basischer Katalysator zugemischt wird.

In der Regel löst man das basische Polymer in dem Lösungsmittel, versetzt die erhaltene Lösung mit dem Verbrückungsreagenz und dem basischen Katalysator und vermischt anschließend innig.

Hinsichtlich des Verbrückungsreagenzes bestehen keinerlei Beschränkungen, sofern es sich um eine Verbindung mit einer funktionellen Gruppe, die mit einer Aminosäure reagiert, handelt. Das Verbrückungsreagenz weist vorzugsweise mindestens zwei funktionelle Gruppen zur Umsetzung mit der Aminogruppe im Molekül auf und ist in der Regel eine organische Verbindung. Beispiele für derartige Gruppen sind Epoxidgruppen und Isocyanatgruppen. Wenn jedoch die Epoxidgrupe und die Isocyanatgruppe im Verbrückungsmittelmolekül vorliegen, so reagieren die beiden Gruppen miteinander, was daher nicht bevorzugt ist.

Das Verbrückungsreagenz weist daher vorzugsweise mindestens zwei Epoxidgruppen oder Isocyanatgruppen pro Molekül auf.

Beispiele für die organische Verbindung mit nicht weniger als zwei Epoxidgruppen und nicht weniger als zwei Isocyanatgruppen sind eine Epoxyverbindung der Formel (II) sowie eine organische Verbindung der Formel (III). Außerdem können die Wasserstoffatome in den Epoxidgruppen der Epoxyverbindung der Formel (II) durch ein Halogen oder eine Niederalkylgruppe substituiert sein. 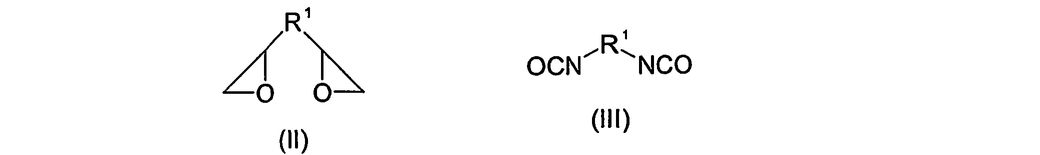 In der obigen Formel steht R¹ für eine Kohlenwasserstoffgruppe mit 1 bis 30 Kohlenstoffatomen, beispielsweise eine geradkettige oder verzweigte Niederalkyleneruppe mit 1 bis 15 Kohlenstoffatomen, die durch eine Nitrogruppe, eine Sauerstoffatom, eine Epoxidgruppe oder eine Arylgruppe substituiert sein kann, und eine geradkettige oder verzweigte Niederalkoxygruppe mit 1 bis 15 Kohlenstoffatomen, die durch eine Nitrogruppe, eine Epoxidgruppe oder eine Arylgruppe substituiert sein kann. Als Arylgruppe werden auch Heteroaryle verstanden die 4 bis 20 Kohlenstoffatome aufweisen, insbesondere bevorzugte Aryle sind im einzelnen Phenyl, Napthyl und Indenyl.

Der Begriff Niederalkyl bedeutet bei Verbindungen der Formel (II) und (III) eine Alkylgruppe mit 1 bis 15 Kohlenstoffatomen.

Der Begriff Aryl bzw. Heteroaryl bedeutet bei Verbindungen der Formel (II) und (III) ein Aryl bzw. Heteroaryl mit 4 bis 20 Kohlenstoffatomen.

Beispiele für R¹ sind die folgenden Gruppen.

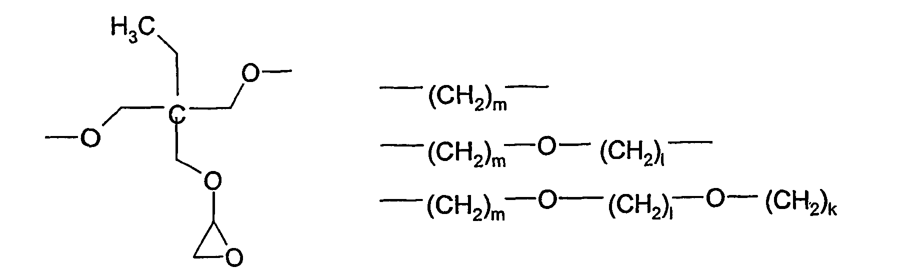

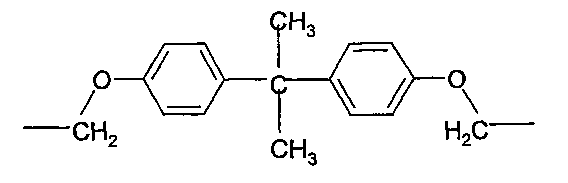

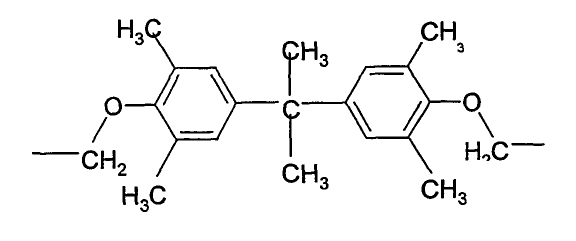

In den obigen Formeln sind m, k und I gleich oder verschieden und stehen jeweils für eine ganze Zahl von 1 bis 6.

Ein Verbrückungsreagenz mit drei funktionellen Gruppen im Molekül, die mit einer Aminogruppe reagieren, ist beispielsweise die folgende Verbindung. 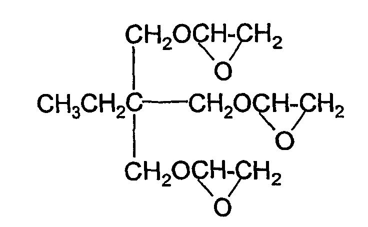 Besonders bevorzugte Verbrückungsreagenzien sind Bis-phenol-A-glycidylether [BPAGDE] und 1,4 Butyl-diglycidylether.

Die Lösung gemäß Schritt A) enthält vorzugsweise 0,1 bis 7 Mol% des Verbrückungsreagenzes pro Einheit des basischen Polymers, weiter bevorzugt 0,5 bis 6 Mol-% des Verbrückungsreagenzes pro Einheit des basischen Polymers, und besonders bevorzugt 1 bis 6 Mol-% des Verbrückungsreagenzes pro Einheit des basischen Polymers. Ist derAnteil an Verbrückungsreagenz zu hoch, so wird die Imprägnierung des basischen Polymers mit einer starken Säure schwierig. Ist der Anteil an Verbrückungsreagenz dagegen zu gering, so wird die mechanische Festigkeit der Polymermembran nicht ausreichend verbessert.

Die Lösung gemäß Schritt A) enthält vorzugsweise mindestens 1 Gewichtsprozent des basischen Polymers und weiter bevorzugt mindestens 2 Gewichtsprozent des basischen Polymers. Die Lösung gemäß Schritt A) enthält vorzugsweise höchstens 95 Gewichtsprozent des basischen Polymers, weiter bevorzugt nicht mehr 80 Gewichtsprozent des basischen Polymers und besonders bevorzugt nicht mehr 50 Gewichtsprozent des basischen Polymers.

Als basisches Polymer wird ein basisches Polymer mit mindestens einer Aminogruppe in einer Wiederholungseinheit verwendet. Da die Aminogruppe in der Wiederholungseinheit vorliegt, ist das Polymer basisch, und die Aminogruppe kann mit dem Verbrückungsmittel reagieren. Im Hinblick auf die Reaktivität gegenüber dem Verbrückungsmittel handelt es sich bei der Aminogruppe in der Wiederholungseinheit vorzugsweise um ein primäre oder sekundäre Aminogruppe.

Die Wiederholungseinheit im basischen Polymer enthält vorzugsweise einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Das basische Polymer ist vorzugsweise in dem Lösungsmittel löslich. Im einzelnen sind in einer Lösung vorzugsweise mindestens 1 Gewichtsprozent des basischen Polymers und weiter bevorzugt nicht weniger als 2 Gewichtsprozent gelöst. Diese Merkmale erleichtern die Bildung einer einheitlichen Polymermembran, ohne daß sich darin Poren bilden.

Als basisches Polymer kommen im Rahmen der vorliegenden Erfindung u.a. Polybenzimidazole, Polyimidazole, Polyvinylimidazole und Polybenzbisimidazole in Betracht. Darunter sind Polybenzimidazole bevorzugt.

Bevorzugte Polybenzimidazole entsprechen der folgenden Formel: 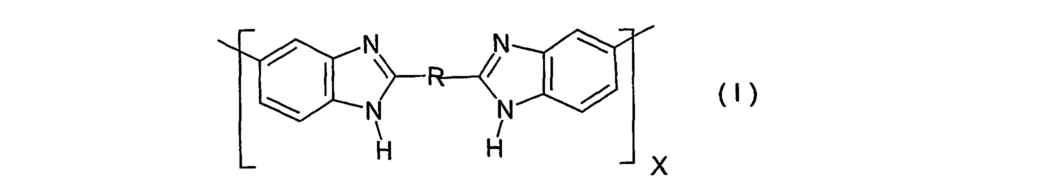 worin R für Alkylen, Perfluoralkylen oder einen Substituenten einer der folgenden Formeln: 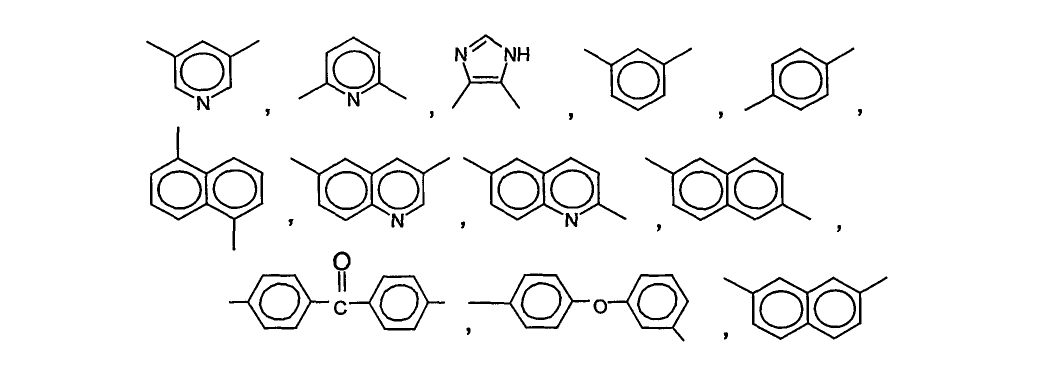 steht, wobei außerdem jede Alkylen- und Perfuoralkylengruppe, die R sein kann, vorzugsweise 1 bis 10 Kohlenstoffatome und besonders bevorzugt 1 bis 6 Kohlenstoffatome aufweist.

Als basische Polymere können auch Polybenzbisimidazole der folgenden Formel verwendet werden: 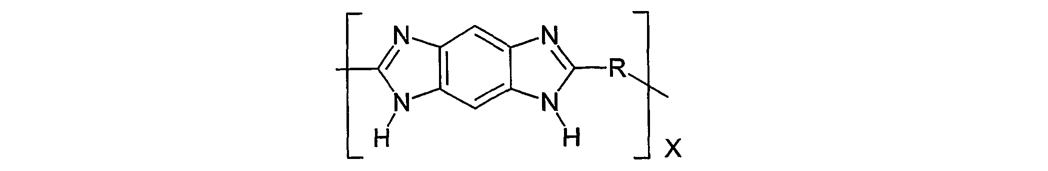 worin R die oben angegebene Bedeutung hat.

In die Aminogruppe der Polybenzimidazole oder Polybenzbisimidazole kann über einen Linker eine stark saure Gruppe, wie eine Sulfonsäuregruppe (-SO₃H), eine Phosphorsäuremonoestergruppe (-O-P(=O)(OH)₂) usw., eingeführt werden.

Als Linker kommen die oben aufgeführten Gruppen R in Betracht. Alternativ dazu kann der Linker eine lineare oder verzweigte Kohlenwasserstoffgruppe mit 1 bis 20 Kohlenstoffatomen, die mit einem Fluoratome substituiert und durch ein Sauerstofatom (-O-) oder eine Gruppe der Formel -N(R²)-, worin R² für ein Wasserstoffatom oder eine Niederalkylgruppe mit 1 bis 6 Kohlenstoffatome steht, unterbrochen sein kann. Als Kohlenwasserstoffgruppe kommen in Betracht: eine Niederalkylgruppe mit 1 bis 20 Kohlenstoffatomen, die durch ein Sauerstoffatom oder eine Arylengruppe, wie eine Phenylengruppe, unterbrochen und verzweigt sein kann; und eine Arylengruppe, wie eine Phenylengruppe, die mit einer Niederalkylgruppe mit 1 bis 20 Kohlenstoffatomen, einer Niederalkoxygruppe mit 1 bis 20 Kohlenstoffatomen, einer Sulfonsäuregruppe, einer Aminogruppe, einem Fluoratom usw. substituiert sein kann. Alternativ dazu kommt eine Gruppe der Formel -(CR³R⁴)ₚ-O-(CR⁵R⁶)_{q}-
worin p und q unabhängig voneinander jeweils für eine ganze Zahl von 1 bis 10 stehen und
R³, R⁴, R⁵, und R⁶ unabhängig voneinander jeweils gleich oder verschieden sind und für ein Wasserstoffatom; ein Fluoratom; eine Niederalkylgruppe mit 1 bis 6 Kohlenstoffatomen oder eine Niederalkoxygruppe mit 1 bis 6 Kohlenstoffatomen; eine Arylgruppe, wie eine Phenylgruppe, die mit einer Niederalkylgruppe mit 1 bis 6 Kohlenstoffatomen, einer Niederalkoxygruppe mit 1 bis 6 Kohlenstoffatomen, einer Sulfonsäuregruppe, einer Aminogruppe, einem Fluoratom usw. substituiert sein kann; oder eine stark saure Gruppe wie eine Sulfonsäuregruppe, eine Phosphorsäuremonoestergruppe und vorzugsweise ein Wasserstoffatom; ein Fluoratom oder eine Niederalkylgruppe mit 1 bis 6 Kohlenstoffatomen stehen, in Betracht.

So kann man beispielsweise in die Polybenzimidazole oder Polybenzbisimidazole eine Gruppe der Formel >N-(CR³R⁴)ᵣ-SO₃H, worin N für ein Stickstoffatom im Imidazolring der Polybenzimidazole oder Polybenzbisimidazole steht; r für eine ganze Zahl von 1 bis 20 steht und R³ und R⁴ die oben aufgeführten Bedeutungen besitzen, einführen.

Bei der Einführung einer stark sauren Gruppe am Stickstoffatom der Polybenzimidazole oder Polybenzbisimidazole über den Linker ist es nicht notwendig, daß der Linker und die starke Säure an allen Stickstoffatomen eingeführt werden. Man kann den Linker und die starke Säure auch nur an einigen der Stickstoffatome einführen, wobei an den anderen Stickstoffatomen gebundene Wasserstoffatome verbleiben. Da die verbleibenden Wasserstoffatome mit dem Verbrückungsmittel reagieren können, ist dies bevorzugt.

Beispielsweise kann man den Linker und die starke Säure an 5 bis 85 Prozent der Stickstoffatome des basischen Polymers, wie die Stickstoffatome des Imidazolrings, insbesondere an 10 bis 75 Prozent der Stickstoffatome und ganz besonders an 15 bis 45 Prozent der Stickstoffatome einführen.

Das basische Polymer kann durch Umsetzung mit einem Sulton in Lösung sulfoniert oder sulfoalkyliert werden. Hierbei verwendet man beispielsweise eine Lösung von 1 bis 30 Gewichtsprozent des basischen Polymers und insbesondere eine Lösung von 5 bis 20 Gewichtsprozent des basischen Polymers. Als Lösungsmittel für die Sulfonierung oder Sulfoalkylierung verwendet man vorzugsweise das Lösungsmittel für das flüssige Medium, das weiter unten beschrieben wird.

Eine Beschreibung dieser Reaktion findet sich beispielsweise in US-PS 5,599,639, US-PS 4,814,399 und Ahmed Mstafa, Chemical Review, S. 195-223(1954). Auf alle diese Druckschriften wird hiermit ausdrücklich Bezug genommen.

Das basische Polymer stammt vorzugsweise aus der Gruppe bestehend aus Polybenzimidazolen, Polyimidazolen, Polyvinylimidazolen und Polybenzbisimidazolen.

Alternativ dazu kann das basische Polymer bereits in seiner Wiederholungseinheit eine stark saure Gruppe aufweisen. Die Gegenwart der starken Säure sorgt für Protonenleitfähigkeit.

Als Lösungsmittel für das flüssige Medium ist ein Lösungsmittel bevorzugt, das nicht mit dem Verbrückungsmittel reagiert. Bevorzugt ist ein organisches Lösungsmittel, insbesondere ein polares organisches Lösungsmittel. Als organische Lösungsmittel seien im einzelnen niedere Amide wie N-Methyl-2-pyrrolidon, N, N-Dimethylacetamid, Dimethylformamid; Dimethylsulfoxid usw. genannt. Man kann auch ein Gemisch dieser Lösungsmittel verwenden.
Bei dem flüssigen Medium kann es sich entweder um eine Lösung oder um eine Suspension handeln. Im Fall der Lösung ist das basische Polymer in dem Lösungsmittel gelöst. Im Fall der Suspension sind als dispergierte Phase dienende Teilchen aus dem basischen Polymer in einem als kontinuierliche Phase dienenden Lösungsmittel dispergiert. Alternativ dazu kann es sich bei dem flüssigen Medium um eine Aufschlämmung oder eine Paste handeln.

Anschließend wird aus der Lösung gemäß Schritt A) eine Folie erzeugt (Schritt B). Hierzu wird die Lösung beispielsweise auf einem planen Substrat ausgegossen und dann bei Normaldruck oder unter vermindertem Druck getrocknet. Alternativ dazu kann man das basische Polymer mit Hilfe eines Rakelverfahrens in die Folie überführen.

Bei dem Substrat für das Vergießen oder das Rakelverfahren kann es sich um einen Halbleiter, wie eine Siliciumscheibe, ein synthetisches Polymer, wie Poly(ethylenterephthalat), und ein Metall, wie rostfreien Stahl, handeln. Wird beispielsweise eine Rolle aus Poly(ethylenterephthalat) als Substrat verwendet, so kann man zur Herstellung einer Folie mit konstanter Breite und beliebiger Dicke eine kontinuierlich arbeitende Vergußanlage verwenden. In diesem Fall wird die Lösung auf das Substrat aufgegossen und läuft durch einen Spalt mit vorgegebenem Abstand und dann durch einen Trockenofen zum Trocknen mittels Warmwind.

Alternativ dazu kann die Folienbildung gemäß dem in der japanischen Anmeldung Nr. Hei 10-125560 beschriebenen Verfahren erfolgen.
Hierbei wird die Lösung in einen Zylinder mit zylinderförmiger Innenfläche gegossen, und anschließend der Zylinder in Drehung versetzt wird. Gleichzeitig läßt man das Lösungsmittel durch die durch die Drehung verursachte Zentrifugalkraft abdampfen; wobei sich auf der Innenfläche des Zylinders eine zylindrische Polymerfolie weitgehend einheitlicher Dicke bildet.

Mit diesem Verfahren kann das basische Polymer mit einer einheitlichen Matrix ausgebildet werden.
Dieses in der japanischen Patentanmeldung Hei 10-125560 beschriebene Verfahren ist ebenfalls Bestandteil der vorliegenden Beschreibung.

Das Entfernen des Lösungsmittel in Schritt C) kann durch Trocknung erfolgen. Zwecks leichterer Trocknung kann das Erhitzen unter vermindertem Druck von nicht mehr als 1 Atmosphäre, vorzugsweise nicht mehr als 0,1 Atmosphären und weiter bevorzugt nicht mehr als 0,05 Atmosphären erfolgen.

Vorteilhafterweise erfolgt die Verbrückung in Schritt D) durch Erhitzen erfolgen, so daß die Verbrückung (Schritt D) und die Trocknung (Schritt C) zugleich in einem Schritt erfolgen kann.

Alternativ dazu kann man das Erhitzen zwecks Trocknung der Folie auf eine Temperatur begrenzen, die unterhalb der Reaktionstemperatur des Verbrückungsreagenzes liegt und anschließemd die Folie zwecks Verbrückung stark erhitzen. Zum Erhitzen zwecks Trocknung oder zum Erhitzen zwecks Verbrückung kann man Warmluft verwenden.

Die Verbrückung gemäß Schritt D) kann auch durch eine Bestrahlung mit elektromagnetischen Wellen (photochemische Reaktion) erfolgen.

Die Verbrückung bewirkt, das die Epoxidverbindung der Formel (IIa) mit dem Polybenzimidazol der Formel (I) unter Verbrückung einer Polymerkette umgesetzt wird.

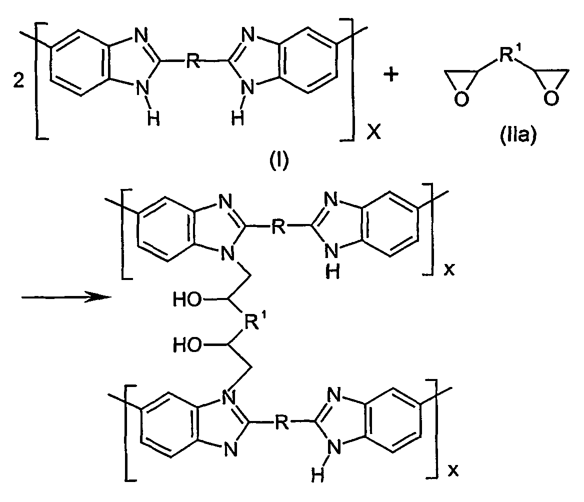

In den obigen Formeln hat R¹ die oben aufgeführte Bedeutung.

Ganz analog wird die Isocyanatverbindung der Formel (III) mit dem Polybenzimidazol der Formel (I) unter Verbrückung einer Polymerkette umgesetzt.

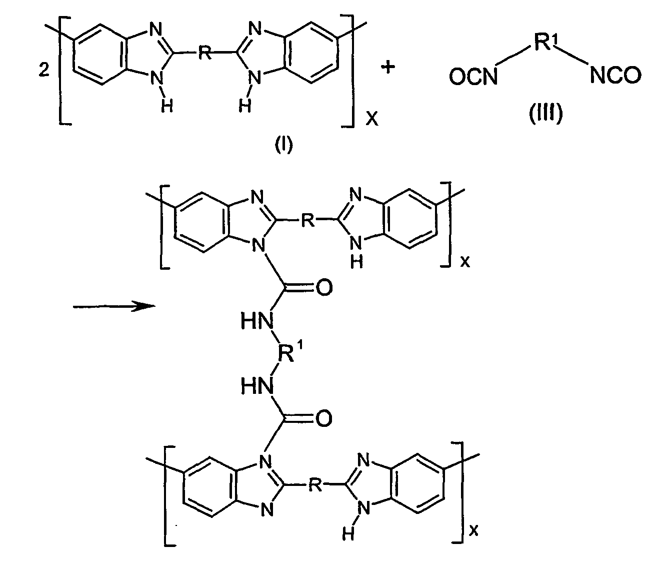

In den obigen Formeln hat R¹ die oben aufgeführte Bedeutung.

In den obigen Formeln werden der einfacheren Darstellung halber verschiedene Polymerketten verbrückt. Es ist jedoch auch möglich, daß eine Verbrückung der gleichen Polymerkette und eine Innenseite einer Wiederholungseinheit erfolgt.

Im Rahmen der vorliegenden Erfindung kann man das basische Polymer zwecks Verleihung von Protonenleitfähigkeit mit einer starken Säure imprägnieren (Schritt E). Die Imprägnierung/Dotierung kann mit der starken Säure in Form des flüssigen Mediums erfolgen. Alternativ dazu kann man die Imprägnierung/Dotierung mit der starken Säure aber auch nach Folienbildung (Schritt C), aber vor dem Erhitzen bzw. der Verbrückung durchführen. Die Imprägnierung mit der starken Säure kann aber auch nach dem Erhitzen erfolgen.

Die Ausführungsform, bei der mit der starken Säure in Form des flüssigen Mediums imprägniert wird, bezieht sich auf die Zugabe einer starken Säure zum flüssigen Medium. Vorzugsweise reagiert das Verbrückungsreagenz nicht mit der starken Säure.

Die Imprägnierung mit der starken Säure erfolgt vorzugsweise nach dem Erhitzen der Folie gemäß Schritt C). Das verbrückte, basische Polymer besitzt eine verbesserte mechanische Festigkeit und läßt sich einfacher handhaben. Da das Verbrückungsreagenz schon abreagiert ist, ist die Reaktion der starken Säure mit nicht umgesetztem Verbrückungsreagenz sehr begrenzt.

Die Folie aus verbrücktem, basischem Polymer kann in eine starke Säure eingetaucht werden, so daß die Folie aus basischem Polymer mit der starken Säure imprägniert wird und zur Membran wird. Man kann das basische Polymer in eine hochkonzentrierte starke Säure mit einer Temperatur von mindestens 35°C, vorzugsweise mindestens 40°C und weiter bevorzugt mindestens 50° über einen Zeitraum von höchstens 5 Stunden und vorzugsweise höchstens 1 Stunde eintauchen.

Die Durchführung des Eintauchschritts bei 35°C oder darüber ermöglicht eine Verkürzung der Eintauchzeit des basischen Polymers in der starken Säure. Im Hinblick auf die Stabilität der basischen Polymere und der für die Handhabung von starken Säuren bei hohen Temperaturen erforderlichen Sicherheitsvorkehrungen erfolgt das Eintauchen bei höchstens 200°C oder darunter, vorzugsweise bei 100°C oder darunter und ganz besonders bevorzugt bei 80°C oder darunter.

Als starke Säure kommen protische starke Säuren in Betracht. Beispielsweise verwendet man bevorzugt Phosphorsäure und Schwefelsäure.

Im Rahmen der vorliegenden Beschreibung versteht man unter "Phosphorsäure" Polyphosphorsäure, Phosphonsäure (H₃PO₃), Orthophosphorsäure (H₃PO₄), Pyrophosphorsäure (H₄P₂O₇), Triphosphorsäure (H₅P₃O₁₀) und Metaphosphorsäure. Die Phosphorsäure, insbesondere Orthophosphorsäure, hat vorzugsweise eine Konzentration von mindestens 80 Gewichtsprozent, besonders bevorzugt eine Konzentration von mindestens 90 Gewichtsprozent, noch weiter bevorzugt eine Konzentration von mindestens 95 Gewichtsprozent und ganz besonders bevorzugt eine Konzentration von mindestens 98 Gewichtsprozent. Der Grund dafür ist darin zu sehen, daß das basische Polymer bei zunehmender Konzentration der starken Säure mit einer größeren Zahl von Molekülen starker Säure imprägniert werden kann.

Die erfindungsgemäß erhaltene Polymerelektrolytmembran, nämlich der Komplex aus dem basischen Polymer und der starken Säure, ist protonenleitend und kann daher vorzugsweise als Elektrolyt für Zellen verwendet werden. Trotzdem ist der Polymerelektrolyt nicht auf die Verwendung für Zellen beschränkt, sondern kann auch als Elektrolyt für ein Anzeigeelement, ein elektrochromes Element oder verschiedene Sensoren verwendet werden.

Als basische Katalysatoren kommen basische Oxide und Hydroxyde der I., II. und III. Hauptgruppe des Periodensystems, Hydride der I. Hauptgruppe des Periodensystems und Litzium-organyle in Frage, vorzugsweise KOH, LiOH, NaOH, RbOH, CsOH, Ca(OH)₂, Mg(OH)₂, Ba(OH)₂, LiH, NaH, KH, Methyl-Lithium und Butyl-Lithium.

Der basische Katalysator wird in Mengen von 0,01 bis 5 Mol%, vorzugsweise 0,02 bis 3 Mol%, insbesondere bevorzugt 0,5 bis 2,5 Mol-%, bezogen auf das eingesetzte Verbrückungsreagenz, in die Lösung gemäß Schritt A) zugesetzt.

Gegenstand der Erfindung ist ferner die bevorzugte Verwendung der erfindungsgemäßen Polymerelektrolytmembran in der Einzelzelle (MEU) für eine Brennstoffzelle.

Die Einzelzelle für eine Brennstoffzelle enthält eine erfindungsgemäße Polymerelektrolytmembran und zwei Elektroden, zwischen denen die Polymerelektrolytmembran sandwichartig angeordnet ist.

Die Elektroden weisen jeweils eine katalytisch aktive Schicht und eine Gasdiffusionsschicht zur Zuführung eines Reaktionsgases zur katalytisch aktiven Schicht auf. Die Gasdiffusionsschicht ist porös, damit reaktives Gas hindurchtreten kann.

Die erfindungsgemäße Polymerelektrolytmembran kann als Elektrolytmembran verwendet werden. Außerdem kann man die Elektrolytmembran sowie einen Vorläufer für eine Einzelzelle (MEU) mit einer oder beiden katalytisch aktiven Schichten herstellen. Des weiteren kann man die Einzelzelle auch durch Fixieren der Gasdiffusionsschicht am Vorläufer herstellen.

Ein weiterer Gegenstand der vorliegenden Erfindung ist eine Brennstoffzelle mit mehreren Einzelzellen (MEU's), die jeweils eine nach dem obigen Verfahren hergestellte Membran aus verbrücktem Polymer und zwei Elektroden, zwischen denen die Membran aus verbrücktem Polymer sandwichartig angeordnet ist, enthalten.

Die mittels des erfindungsgemäßen Verfahren hergestellten Membranen zeigen eine gegenüber dem unverbrückten Polymer eine um mehr als 100% erhöhte Bruchzähigkeit.

Die erfindungsgemäßen Membranen zeigen weiterhin bei einer Bruchdehnung von mindestens 60% eine Spannung von mindestens 1,5 MPa., vorzugsweise eine Bruchdehnung von mindestens 80% eine Spannung von mindestens 2 MPa.

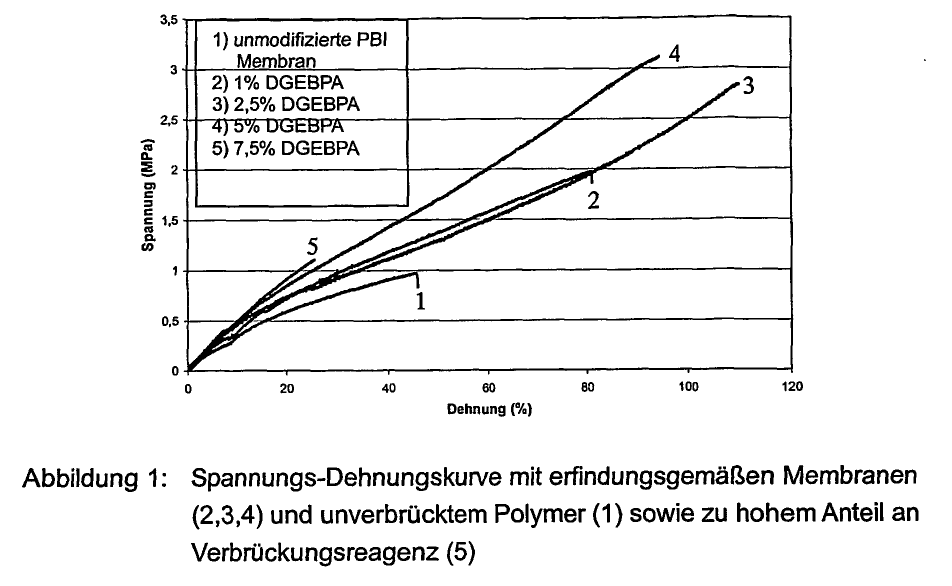

Aus Abbildung 1 ist offensichtlich, das die Bruchzähigkeit (Fläche unter der Kurve) gegenüber dem unverbrückten bzw. einen zu hohen Anteil an Verbrückungsreagenz enthaltenden Polymeren deutlich verbessert ist.

Die Messung der Bruchdehnung/Spannung wird an streifenförmigen Proben mit einer Breite von 15mm und Länge von 120 mm durchgeführt. Der Zugversuch erfolgt bei einer Temperatur von 100°C mit einer Dehngeschwindigkeit von 50 mm/min.

| Mol-% BPADGE | E-Modul [Mpa] | Zugfestigkeit [Mpa] | Bruchdehnung [%] | Bruchzähig keit [kJ/m²] |
|---|---|---|---|---|
| 0 | 3,9 | 1 | 47 | 29,5 |
| 1 | 4,6 | 2 | 82,6 | 98 |
| 2,5 | 6,8 | 2,85 | 98,2 | 158 |
| 5 | 5,3 | 3,2 | 99 | 172 |
| 7,5 | 5,6 | 1,2 | 30 | 20 |

Die erfindungsgemäßen Membranen zeigen erfreulicherweise eine nahezu unverändertes Quellverhalten zwischen 40 und 50%.

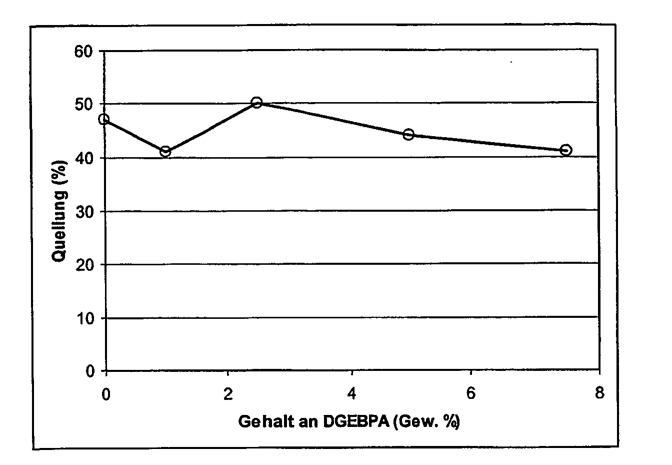

### Beispiele

### Verbrückung mit konstantem KOH-Zusatz

Jeweils mit 1, 2.5, 5 und 7,5 Mol% BPADGE wird eine 15%-ige PBI Lösung (150 gramm, 0.4870 mol) nach folgender Arbeitsvorschrift verbrückt werden.

Die Verbrückungsvorschrift:
Die PBI-Lösung wird in einem Kolben vorgelegt und mit Argon entgast. Dann wird zur PBI-Lösung 10 mg KOH gegeben und 30 min bei 60°C gerührt. Danach wird das Verbrückungsreagenz dazu gegeben und bei 60°C 1 h lang weiter gerührt. Die Lösung wird in entgast und ein Film gegossen. Der Film wird dann mit über einen Zeitraum von 15 - 30 Minuten bei einem Temperaturintervall zwischen 30 und 200°C Die so erhaltenen Filme wurden mit 85%-H₃PO₄ über mindestens 72 Stunden dotiert. Anschließend wurden die Messungen gemacht.

## Patentansprüche

1. Membran aus verbrücktem Polymer erhältlich durch ein Verfahren umfassend die folgenden Schritte:
A. Herstellung einer Lösung enthaltend ein basisches Polymer mit mindestens einer Aminogruppe in einer Wiederholungseinheit und mindestens einem Verbrückungsreagenz in einem geeigneten Lösemittel,
B. Gießen einer Folie mit der aus Schritt A) erhaltenen Lösung
C. Entfernen des Lösemittels aus Schritt A)
D. Durchführung der Verbrückungsreaktion in der gemäß Schritt C) erhaltenen Folie
E. Dotierung der gemäß Schritt D) erhaltenen Folie mit einer starken Säure **dadurch gekennzeichnet, daß** in Schritt A) zusätzlich ein basischer Katalysator zugemischt wird.

2. Membran gemäß Anspruch 1, **dadurch gekennzeichnet, daß** das Verbrückungsreagenz mindestens zwei Epoxidgruppen oder Isocyanatgruppen pro Molekül aufweist

3. Membran gemäß Anspruch 1, **dadurch gekennzeichnet, daß** das Verbrückungsreagenz mindestens eine Verbindung der Formel (II) und/oder (III) 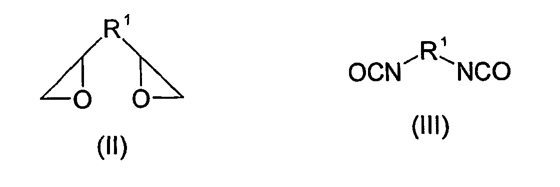 worin R¹ für eine Kohlenwasserstoffgruppe mit 1 bis 30 Kohlenstoffatomen steht, ist.

4. Membran gemäß Anspruch 3, **dadurch gekennzeichnet, daß** das R¹ gleich 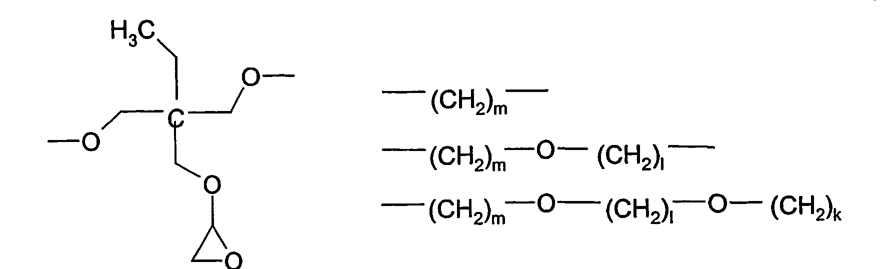 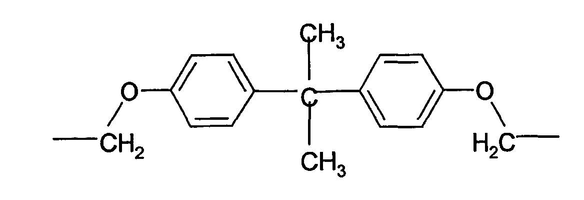 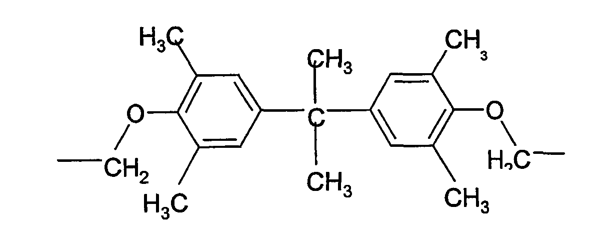 worin m, k und I jeweils gleich oder verschieden sind und für eine ganze Zahl von 1 bis 6 stehen, ist.

5. Membran gemäß Anspruch 1, **dadurch gekennzeichnet, daß** das Verbrückungsreagenz mindestens drei Epoxidgruppen pro Molekül enthält.

6. Membran gemäß Anspruch 5, **dadurch gekennzeichnet, daß** 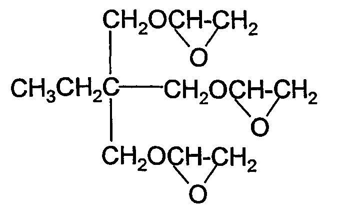 ist.

7. Membran gemäß Anspruch 1, **dadurch gekennzeichnet, daß** Verbückungsreagenz Bis-phenol-A-glycidylether [BPAGDE] und/oder 1,4 Butyl-diglycidylether ist.

8. Membran gemäß Anspruch 1, **dadurch gekennzeichnet, daß** die Lösung gemäß Schritt A) 0,1 bis 7 Mol% des Verbrückungsreagenzes pro Einheit des basischen Polymers enthält.

9. Membran gemäß Anspruch 1, **dadurch gekennzeichnet, daß** als basisches Polymer Polybenzimidazole, Polyimidazole, Polyvinylimidazole und Polybenzbisimidazole eingesetzt werden.

10. Membran gemäß Anspruch 9, **dadurch gekennzeichnet, daß** als Polybenzimidazole solche mit der Formel: 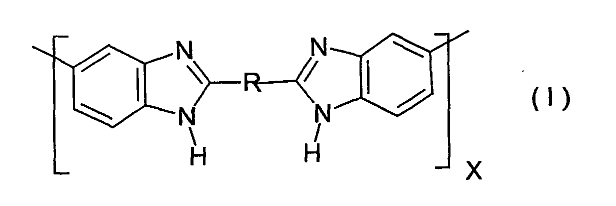 worin R für Alkylen, Perfluoralkylen oder einen Substituenten einer der folgenden Formeln: 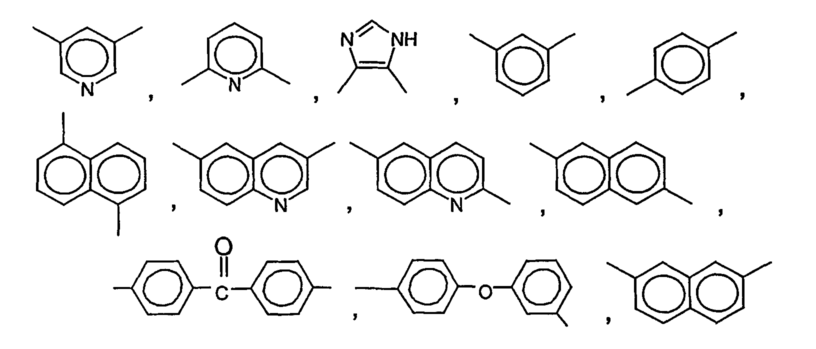 steht, wobei außerdem jede Alkylen- und Perfuoralkylengruppe, die R sein kann, vorzugsweise 1 bis 10 Kohlenstoffatome und besonders bevorzugt 1 bis 6 Kohlenstoffatome aufweist, eingesetzt wird.

11. Membran gemäß Anspruch 9, **dadurch gekennzeichnet, daß** als Polybenzbisimidazole solche mit der Formel 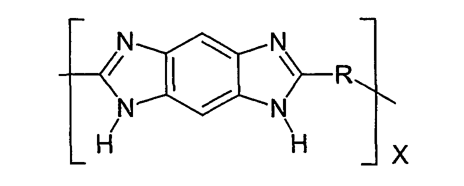 worin R die unter Anspruch 10 angegebene Bedeutung hat, verwendet werden.

12. Membran gemäß Anspruch 1, **dadurch gekennzeichnet, daß** die Verbrückung in Schritt D) durch Erhitzen erfolgt, so daß die Verbrückung (Schritt D) und die Trocknung (Schritt C) zugleich in einem Schritt erfolgt.

13. Membran gemäß Anspruch 1, **dadurch gekennzeichnet, daß** die Trocknung der Folie bei einer Temperatur durchgeführt wird, die unterhalb der Reaktionstemperatur des Verbrückungsreagenzes liegt und anschließemd die Folie zwecks Verbrückung weiter erhitzt wird.

14. Membran gemäß Anspruch 1, **dadurch gekennzeichnet, daß** die Verbrückung in Schritt D) durch eine Bestrahlung mit elektromagnetischen Wellen (photochemische Reaktion) erfolgt.

15. Membran gemäß Anspruch 1, **dadurch gekennzeichnet, daß** als starke Säure in Schritt E) Phosphorsäure oder Schwefelsäure eingesetzt wird.

16. Membran gemäß Anspruch 1, **dadurch gekennzeichnet, daß** als basische Katalysatoren basische Oxide und Hydroxyde der I., II. und III. Hauptgruppe des Periodensystems, Hydride der I. Hauptgruppe des Periodensystems und Litzium-organyle eingesetzt werden.

17. Membran gemäß Anspruch 16, **dadurch gekennzeichnet, daß** als basische Katalysatoren KOH, LiOH, NaOH, RbOH, CsOH, Ca(OH)₂, Mg(OH)₂, Ba(OH)₂, LiH, NaH, KH, Methyl-Lithium und/oder Butyl-Lithium eingesetzt werden.

18. Membran gemäß Anspruch 1, **dadurch gekennzeichnet, daß** der basische Katalysator in Mengen von 0,01 bis 5 Mol-%, bezogen auf das eingesetzte Verbrückungsreagenz, in die Lösung gemäß Schritt A) zugesetzt wird.

19. Membran gemäß Anspruch 1, **dadurch gekennzeichnet, daß** sie eine gegenüber einer Membran welche keine Verbrückungen enthält eine um mehr als 100% erhöhte Bruchzähigkeit aufweist.

20. Membran gemäß Anspruch 1, **dadurch gekennzeichnet, daß** Membran eine Bruchdehnung von mindestens 60% und eine Spannung von mindestens 1,5 MPa. Aufweist.

21. Verwendung der Membran gemäß einem der Ansprüche 1 bis 20 zur Herstellung von Membran-Elektroden-Einheiten.

22. Verwendung der Membran gemäß einem der Ansprüche 1 bis 20 zur Herstellung von Brennstoffzellen.

23. Membran-Elektroden-Einheit enthaltend mindestens eine Elektrode und mindestens eine Membran gemäß einem der Ansprüche 1 bis 20

24. Brennstoffzelle enthaltend mindestens Membran-Elektroden-Einheit gemäß Anspruch 23.

## Claims

1. A membrane comprising a bridged polymer obtainable by a process comprising the following steps:
A. preparing a solution comprising a basic polymer having at least one amino group in a repeating unit and at least one bridging reagent in a suitable solvent,
B. casting a film using the solution obtained from step A),
C. removing the solvent from step A),
D. carrying out the bridging reaction in the film obtained in step C),
E. doping the film obtained in step D) with a strong acid,
wherein a basic catalyst is additionally added in step A).

2. A membrane as claimed in claim 1, wherein the bridging reagent has at least two epoxide groups or isocyanate groups per molecule.

3. A membrane as claimed in claim 1, wherein the bridging reagent is at least one compound of the formula (II) and/or (III) 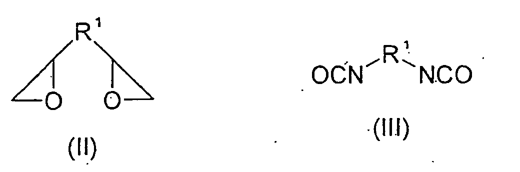 where R¹ is a hydrocarbon group having from 1 to 30 carbon atoms.

4. A membrane as claimed in claim 3, wherein R¹ is 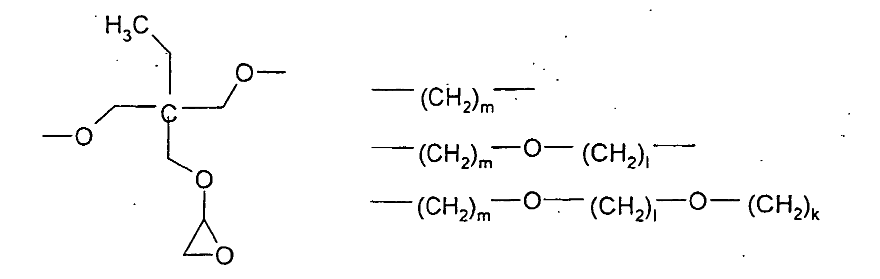 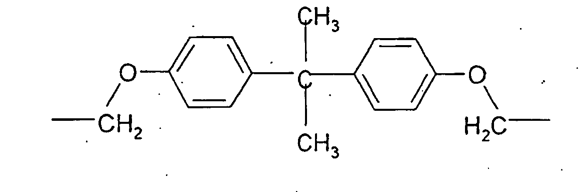 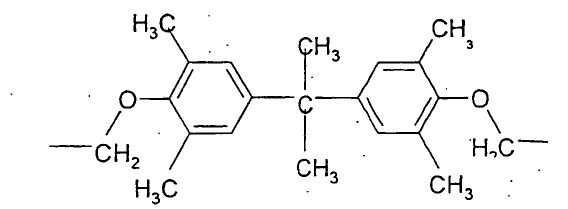 where m, k and I are identical or different and are each an integer from 1 to 6.

5. A membrane as claimed in claim 1, wherein the bridging reagent contains at least three epoxide groups per molecule.

6. A membrane as claimed in claim 5, wherein the bridging reagent is the compound

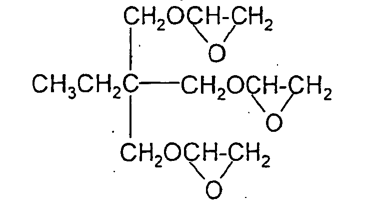

7. A membrane as claimed in claim 1, wherein the bridging reagent is bisphenol A glycidyl ether [BPAGDE] and/or 1,4-butanediol diglycidyl ether.

8. A membrane as claimed in claim 1, wherein the solution obtained in step A) contains from 0.1 to 7 mol% of the bridging reagent per unit of the basic polymer.

9. A membrane as claimed in claim 1, wherein the basic polymer used is polybenzimidazole, polyimidazole, polyvinylimidazole or polybenzobisimidazole.

10. A membrane as claimed in claim 9, wherein the polybenzimidazole used is a polymer of the formula: 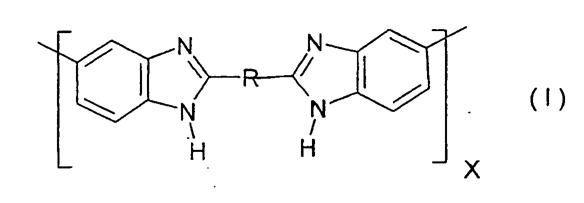 where R is alkylene, perfluoroalkylene or a substituent having one of the following formulae: 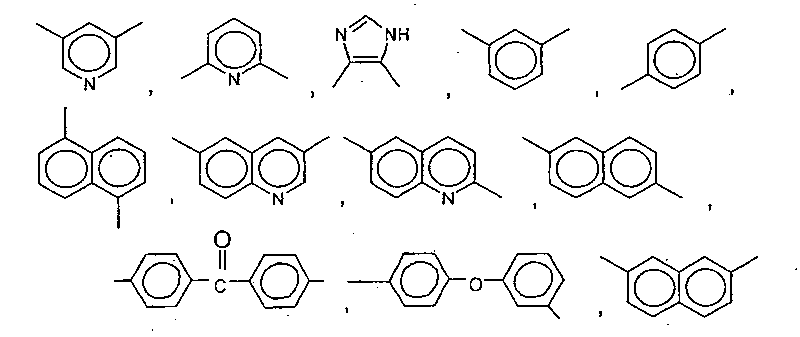 where each alkylene and perfluoroalkylene group R preferably has from 1 to 10 carbon atoms, particularly preferably from 1 to 6 carbon atoms.

11. A membrane as claimed in claim 9, wherein the polybenzobisimidazole used is a polymer of the formula 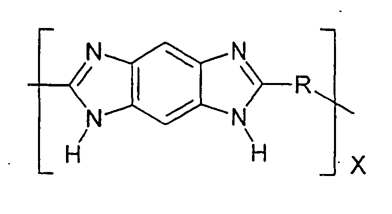 where R is as defined in claim 10.

12. A membrane as claimed in claim 1, wherein bridging in step D) is effected by heating so that bridging (step D) and drying (step C) are carried out at the same time in one step.

13. A membrane as claimed in claim 1, wherein drying of the film is carried out at a temperature below the reaction temperature of the bridging reagent and the film is subsequently heated further to effect bridging.

14. A membrane as claimed in claim 1, wherein bridging in step D) is effected by irradiation with electromagnetic waves (photochemical reaction).

15. A membrane as claimed in claim 1, wherein the strong acid used in step E) is phosphoric acid or sulfuric acid.

16. A membrane as claimed in claim 1, wherein basic catalysts used are basic oxides and hydroxides of elements of main groups I, II and III of the Periodic Table, hydrides of elements of main group I of the Periodic Table and organolithium compounds.

17. A membrane as claimed in claim 16, wherein basic catalysts used are KOH, LiOH, NaOH, RbOH, CsOH, Ca(OH)₂, Mg(OH)₂, Ba(OH)₂, LiH, NaH, KH, methyllithium and/or butyllithium.

18. A membrane as claimed in claim 1, wherein the basic catalyst is added in amounts of from 0.01 to 5 mol%, based on the bridging reagent used, to the solution obtained in step A).

19. A membrane as claimed in claim 1 which has a fracture toughness which is more than 100% above that of a membrane containing no bridges.

20. A membrane as claimed in claim 1 which has an elongation at break of at least 60% and an ultimate tensile strength of at least 1.5 MPa.

21. The use of a membrane as claimed in any of claims 1 to 20 for producing membrane-electrode units.

22. The use of a membrane as claimed in any of claims 1 to 20 for producing fuel cells.

23. A membrane-electrode unit comprising at least one electrode and at least one membrane as claimed in any of claims 1 to 20.

24. A fuel cell comprising at least one membrane-electrode unit as claimed in claim 23.

## Revendications

1. Membrane de polymère ponté susceptible d'être obtenue au moyen d'un procédé comprenant les étapes suivantes :
A. Préparation d'une solution contenant un polymère basique avec au moins un groupe amino dans un motif de répétition et au moins un réactif de pontage dans un solvant approprié,
B. Revêtement d'une feuille par coulée avec la solution obtenue à l'étape A),
C. Elimination du solvant de l'étape A),
D. Réalisation de la réaction de pontage dans la feuille obtenue selon l'étape C),
E. Dopage de la feuille obtenue selon l'étape D) avec un acide fort,
**caractérisé en ce qu'**à l'étape A) on ajoute au mélange un catalyseur basique.

2. Membrane selon la revendication 1, **caractérisée en ce que** le réactif de pontage présente au moins deux groupes époxyde ou deux groupes isocyanate par molécule

3. Membrane selon la revendication 1, **caractérisée en ce que** le réactif de pontage est au moins un composé de formule (II) et/ou (III) 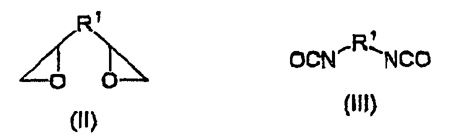 dans laquelle R¹ représente un groupe hydrocarboné avec 1 à 30 atomes de carbone.

4. Membrane selon la revendication 3, **caractérisée en ce que** R¹ est égal à 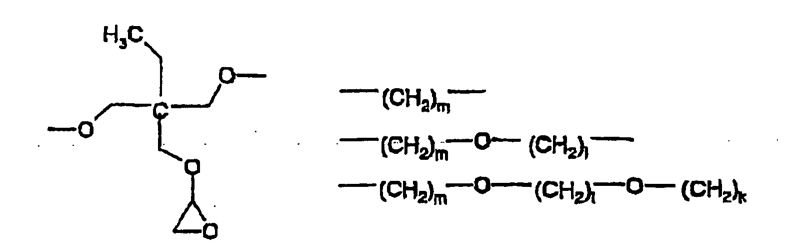 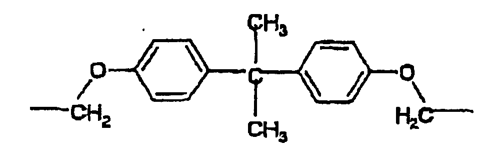 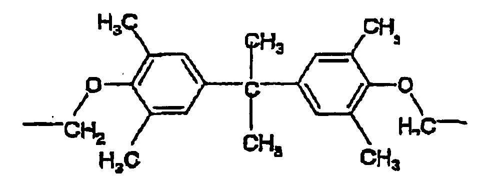 formules dans lesquelles m, k et l sont respectivement identiques ou différents et représentent un nombre entier de 1 à 6.

5. Membrane selon la revendication 1, **caractérisée en ce que** le réactif de pontage contient au moins trois groupes époxyde par molécule.

6. Membrane selon la revendication 5, **caractérisée en ce que** le réactif de pontage est le composé

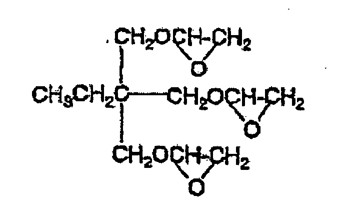

7. Membrane selon la revendication 1, **caractérisée en ce que** le réactif de pontage est le bis-phénol-A-glycidyléther [BPAGDE] et/ou le 1,4-butyldiglycidyléther.

8. Membrane selon la revendication 1, **caractérisée en ce que** la solution selon l'étape A) contient 0,1 à 7 % en moles du réactif de pontage par motif du polymère basique.

9. Membrane selon la revendication 1, **caractérisée en ce qu'**on utilise comme polymère basique le polybenzimidazole, polyimidazole, polyvinylimidazole et polybenzbisimidazole.

10. Membrane selon la revendication 9, **caractérisée en ce qu'**on utilise comme polybenzimidazole ceux de formule : 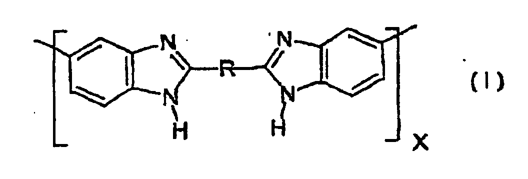 dans laquelle R représente un alkylène, perfluoroalkylène ou un substituant d'une des formules suivantes : 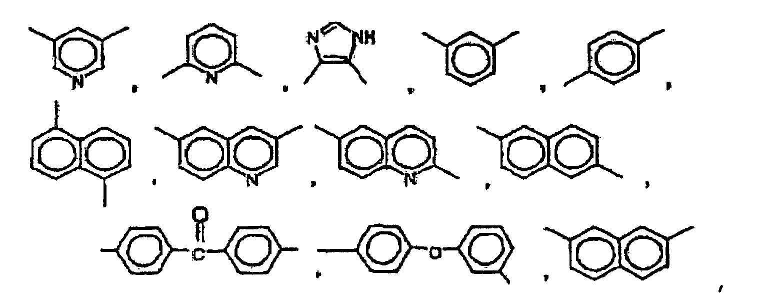 dans lesquelles de plus chaque groupe alkylène ou perfluoroalkylène, qui peut être R, présente de préférence 1 à 10 atomes de carbone et mieux encore 1 à 6 atomes de carbone.

11. Membrane selon la revendication 9, **caractérisée en ce qu'**on utilise comme polybenzbisimidazole ceux de formule 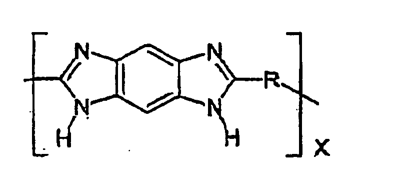 dans laquelle R a la signification indiquée à la revendication 10.

12. Membrane selon la revendication 1, **caractérisée en ce qu'**on réalise le pontage par chauffage à l'étape D), de sorte que le pontage (étape D) et le séchage (étape C) soient réalisés en même temps en une étape.

13. Membrane selon la revendication 1, **caractérisée en ce qu'**on réalise le séchage de la feuille à une température qui se situe au-dessous de la température de réaction du réactif de pontage et on continue ensuite à chauffer la feuille pour le pontage.

14. Membrane selon la revendication 1, **caractérisée en ce qu'**on réalise le pontage à l'étape D) au moyen d'une irradiation avec des ondes électromagnétiques (réaction photochimique).

15. Membrane selon la revendication 1, **caractérisée en ce qu'**on utilise comme acide fort à l'étape E) l'acide phosphorique ou l'acide sulfurique.

16. Membrane selon la revendication 1, **caractérisée en ce qu'**on utilise comme catalyseurs basiques des oxydes et hydroxydes basiques du groupe principal I., II. et III. de la classification périodique des éléments, des hydrures du groupe I. de la classification périodique des éléments et des lithium-organyles.

17. Membrane selon la revendication 16, **caractérisée en ce qu'**on utilise comme catalyseurs basiques KOH, LiOH, NaOH, RbOH, CsOH, Ca(OH)₂, Mg(OH)₂, Ba(OH)₂, LiH, NaH, le méthyl-lithium et/ou butyl-lithium.

18. Membrane selon la revendication 1, **caractérisée en ce qu'**on ajoute le catalyseur basique en quantités de 0,01 à 5 % en moles, par rapport au réactif de pontage mis en oeuvre, à la solution selon l'étape A).

19. Membrane selon la revendication 1, **caractérisée en ce que**, par rapport à une membrane qui ne contient pas de pontages, elle présente une augmentation de la ténacité à la rupture de plus de 100 %.

20. Membrane selon la revendication 1, **caractérisée en ce que** la membrane présente un allongement à la rupture d'au moins 60 % et une contrainte d'au moins 1,5 MPa.

21. Utilisation de la membrane selon l'une des revendications 1 à 20 pour la fabrication d'unités membrane-électrodes.

22. Utilisation de la membrane selon l'une des revendications 1 à 20 pour la fabrication de piles à combustible.

23. Unité membrane-électrodes contenant au moins une électrode et au moins une membrane selon l'une des revendications 1 à 20.

24. Piles à combustible contenant au moins une unité membrane-électrodes selon la revendication 23.
